# EUROPEAN PATENT SPECIFICATION

(11) **EP 4 397 956 B1**
(45) Date of publication and mention of the grant of the patent: **06.08.2025**
(21) Application number: 23181457.5
(22) Date of filing: 26.06.2023
(51) Int. Cl.: G01N 15/06

(54) **APPARATUS AND METHOD FOR DETECTING FINE PARTICLES**
VORRICHTUNG UND VERFAHREN ZUR DETEKTION FEINER PARTIKEL
APPAREIL ET PROCÉDÉ DE DÉTECTION DE PARTICULES FINES

(30) Priority: 03.01.2023 KR 20230000805
(43) Date of publication of application: 10.07.2024
(73) Proprietor: Samsung Electronics Co., Ltd., Suwon-si, Gyeonggi-do 16677 (KR)
(72) Inventor: Jang, Hyeong Seok, Suwon-si, Gyeonggi-do (KR); Jung, Won Jong, Suwon-si, Gyeonggi-do (KR); Kim, Jin Ha, Suwon-si, Gyeonggi-do (KR); Namkoong, Kak, Suwon-si, Gyeonggi-do (KR); Youn, Hyung Jun, Suwon-si, Gyeonggi-do (KR); Lee, Jae Hong, Suwon-si, Gyeonggi-do (KR)
(74) Representative: Grünecker Patent- und Rechtsanwälte PartG mbB

(56) References cited:
- EP-A1- 4 249 911
- JP-A- 2011 185 684
- US-A1- 2019 346 358
- US-A1- 2021 389 228
- US-A1- 2022 307 068
- US-B2- 8 274 654

## Description

### BACKGROUND

### 1. Field

Example embodiments of the present disclosure relate to an apparatus and method for detecting fine particles, and more specifically, to an apparatus and method for quantifying fine particles through spectral analysis.

### 2. Description of Related Art

An analysis of samples related to clinics or the environment is achieved through a biochemical, chemical, or mechanical treatment process. Recently, the development of techniques for diagnosing or monitoring a biological sample has drawn a significant interest. The application of a molecular diagnosis method based on nucleic acid has significantly increased recently in the fields of diagnosing an infectious disease or cancer, pharmacogenomics, or developing a new medicine due to its high accuracy and sensitivity. A fine particle device is widely used for simply and precisely analyzing a sample according to various purposes.
US 2019/346358 A1 relates to an active sieve device for the isolation and characterization of bio-analytes, comprising a substrate for supporting the bio-analytes. The substrate comprises a plurality of interconnections and a plurality of regions, each region comprising a hole and at least one electrode embedded in or located on the substrate and electrically associated with the hole. Each region further comprises at least one transistor integrated in the substrate and operably connected to the at least one electrode and to at least one of the plurality of interconnections.
US 8 274 654 B2 relates to a dielectric sheet which is arranged between a pair of electrodes for forming an electric field in a cell that stores therein a sample having particles dispersed movably in a medium, the dielectric sheet being formed to include multiple mutually parallel slits to form a diffraction grating, and a parallel light flux is applied to the diffraction grating to generate diffracted light. A gradient electric field in the vicinity of the slits generated by applying a voltage between the pair of electrodes causes the particles to migrate in such a manner as to cover the slits or away from the slits and thereby the contrast of the diffraction grating to vary, and whereby the diffusion coefficient and/or size of the particles can be calculated from the temporal change of the diffracted light when the particles diffuse freely after stopping the application of the voltage.
US 2021/389228 A1 relates to a high efficiency and high sensitivity particle capture type terahertz sensing system. The particle capture type terahertz sensing system includes a sensing substrate to capture particles, and a terahertz sensor to emit terahertz electromagnetic waves to the sensing substrate to sense the particles, wherein the sensing substrate includes a base substrate and a particle capture structure layer formed on the base substrate, the particle capture structure layer includes a plurality of slits for focusing the terahertz electromagnetic waves, the particle capture structure layer captures the particles in the plurality of slits using dielectrophoresis, and an area in which the terahertz electromagnetic waves converge to the plurality of slits matches an area in which the particles are captured in the plurality of slits through the dielectrophoresis.

### SUMMARY

It is the object of the present invention to enable an improved detection of fine particles.
This object is solved by the subject matter of the independent claims which define the present invention.
Preferred embodiments of the present invention are defined by the dependent claims.

One or more example embodiments provide an apparatus and method for detecting fine particles, and more specifically, to an apparatus and method for quantifying fine particles through spectral analysis.

The invention is claimed in the independent claims. Preferred embodiments are specified in the dependent claims.

According to an aspect of an example embodiment, there is provided an apparatus configured to detect fine particles, including a fine particle trap including a plurality of through holes that are configured to trap the fine particles, a measurer including a light source configured to emit light to the plurality of through holes, and a detector configured to detect light scattered, reflected, or transmitted through the plurality of through holes and measure a spectrum, and a processor configured to estimate a number of the fine particles trapped in the plurality of through holes based on of the measured spectrum, wherein the plurality of through holes have a diameter equal to or less than 10 µm (micrometer).

The fine particle trap may further include an inlet through which a sample is injected, a channel through which the injected sample moves and an outlet through which the sample is discharged, and the plurality of through holes may be formed to penetrate in a direction perpendicular to a length direction of the channel such that the sample moving along the channel is trapped.

The fine particles may be trapped in the through holes by at least one of capillarity, dielectrophoresis, or photothermal effect.

The fine particle trap may further include an alternating current (AC) electrode configured to induce the dielectrophoresis based on a control of the processor.

The fine particle trap may further include a heat source configured to generate the photothermal effect based on a control of the processor.

The plurality of through holes may be provided to have photonic crystals.

A shape of each of the plurality of through holes and a size of each of the plurality of through holes may be determined based on at least one of a shape of each target fine particles, a size of each target fine particles, or a type of each target fine particles.

The processor may be further configured to extract one or more features from the spectrum and estimate the number of the fine particles based on the extracted features using a fine particle estimation model.

The processor may be further configured to extract the one or more features from the spectrum using a principal component analysis (PCA).

The one or more features may include a feature of at least one of a first principal component extracted from the spectrum through the PCA and a second principal component extracted from the spectrum through the PCA.

The processor may be further configured to determine whether to perform calibration and, based on determining to perform calibration, calibrate the fine particle estimation model using one or more reference particles.

Based on the one or more reference particles being trapped in the plurality of through holes, the processor may be further configured to control the measurer to obtain a plurality of calibration spectra and train the fine particle estimation model based on the obtained plurality of calibration spectra.

According to another aspect of an example embodiment, there is provided a method of detecting fine particles, including trapping the fine particles in a plurality of through holes, emitting, by a light source, light to the plurality of through holes, detecting, by a detector, light scattered, reflected, or transmitted through the plurality of through holes, measuring, by the detector, a spectrum based on the detected light, and estimating, by a processor, a number of the fine particles trapped in the plurality of through holes based on the measured spectrum, wherein the plurality of through holes have a diameter equal to or less than 10 µm.

The fine particles may be trapped in the through holes by at least one of capillarity, dielectrophoresis, or photothermal effect.

The method may further include controlling, by the processor, an alternating current (AC) voltage of a fine particle trap to induce the dielectrophoresis.

The method may further include controlling, by the processor, a heat source included in a fine particle trap to generate the photothermal effect.

The estimating of the number of the fine particles may include extracting one or more features from the spectrum and estimating the number of the fine particles based on the extracted features using a fine particle estimation model.

The extracting of the one or more features may include extracting the one or more features from the spectrum using a principal component analysis (PCA).

The method may further include determining whether to perform calibration, and calibrating the fine particle estimation model using one or more reference particles based on determining to perform calibration.

The calibrating of the fine particle estimation model may include trapping the one or more reference particles in the plurality of through holes, obtaining a plurality of calibration spectra, and training the fine particle estimation model based on the obtained plurality of calibration spectra.

### BRIEF DESCRIPTION OF THE DRAWINGS

Embodiments will be more clearly understood from the following detailed description taken in conjunction with the accompanying drawings in which:
FIG. 1 is a block diagram illustrating an apparatus configured to detect fine particles according to an example embodiment;
FIGS. 2A, 2B, 2C, and 2D are structural diagrams of a fine particle trap according to example embodiments;
FIGS. 3A, 3B, 3C, and 3D are diagrams illustrating examples of quantifying fine particles through spectrum analysis;
FIG. 4 is a block diagram illustrating an apparatus configured to detect fine particles according to another example embodiment;
FIG. 5 is a flowchart illustrating a method of detecting fine particles according to an example embodiment; and
FIG. 6 is a flowchart illustrating a method of detecting fine particles according to another example embodiment..

### DETAILED DESCRIPTION

Details of example embodiments are included in the following detailed description and drawings. Advantages and features of the disclosure, and a method of achieving the same will be more clearly understood from the following embodiments described in detail with reference to the accompanying drawings. Throughout the drawings and the detailed description, unless otherwise described, the same drawing reference numerals will be understood to refer to the same elements, features, and structures.

It will be understood that, although the terms first, second, etc. may be used herein to describe various elements, these elements should not be limited by these terms. These terms are only used to distinguish one element from another. Also, the singular forms are intended to include the plural forms as well, unless the context clearly indicates otherwise. It will be further understood that when an element is referred to as "comprising" another element, the element is intended not to exclude one or more other elements, but to further include one or more other elements, unless explicitly described to the contrary. In the following description, terms such as "unit" and "module" indicate a unit for processing at least one function or operation and they may be implemented by using hardware, software, or a combination thereof.

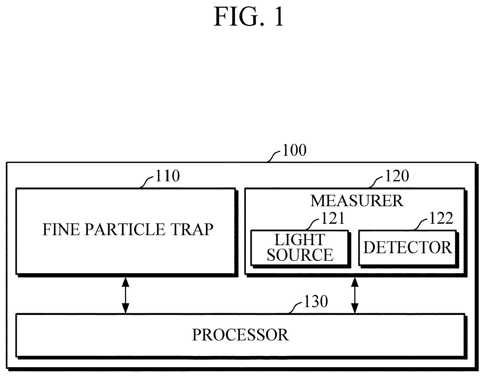

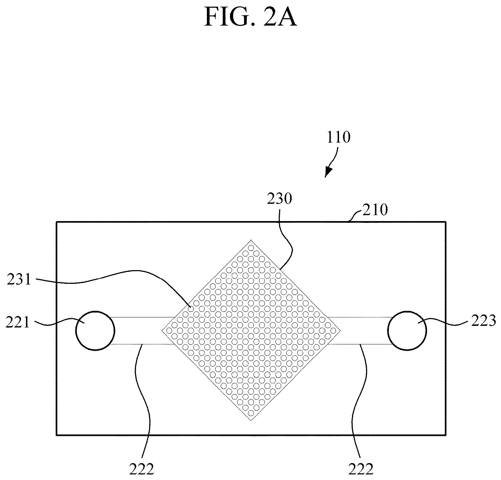

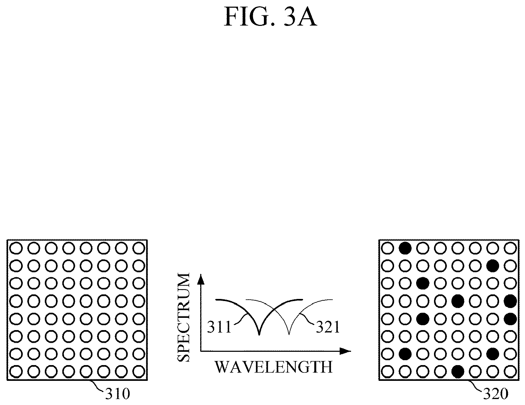

FIG. 1 is a block diagram illustrating an apparatus configured to detect fine particles according to an example embodiment. FIGS. 2A to 2D are structural diagrams of a fine particle trap according to example embodiments. FIGS. 3A to 3D are diagrams illustrating examples of quantifying fine particles through spectrum analysis.

Referring to FIG. 1, an apparatus 100 configured to detect fine particles includes a fine particle trap 110, a measurer 120, and a processor 130.

When a sample is injected, the fine particle trap 110 may trap target fine particles. The sample may include respiratory secretions, or bio-fluids including at least one of blood, urine, perspiration, tears, saliva, etc., or a swab sample of an upper respiratory tract, dust in the atmosphere, or a solution of the bio-fluid, the dust, or the swab sample dispersed in other medium. In this case, the other medium may include water, saline solution, alcohol, phosphate buffered saline solution, vital transport media, etc., but is not limited thereto. The target fine particles may include ribonucleic acid (RNA), deoxyribonucleic acid (DNA), peptide nucleic acid (PNA), locked nucleic acid (LNA), virus (e.g., RNA virus, DNA virus, PNA virus, LNA virus), or duplex of one or two or more types of LNA virus, bacteria, pathogens, germs, oligopeptides, proteins, toxin, particulate matter, etc., but are not limited thereto. The term "particulate matter" may refer to tiny particles suspended in the air that can be inhaled into lungs and cause various health problems.

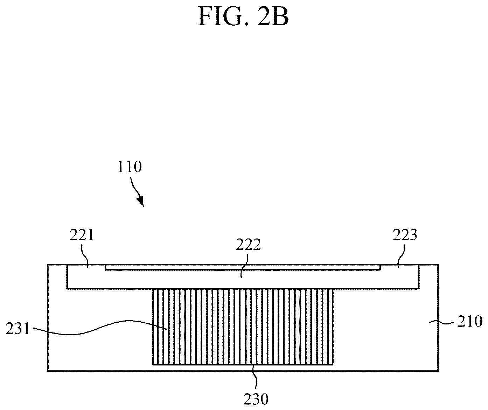

FIG. 2A is a plan view illustrating a structure of the fine particle trap 110. FIGS. 2B to 2D are front views of the structure of the fine particle trap 110.

The fine particle trap 110 may include an inlet 221 through which a sample is injected into a substrate 210, a channel 222 through which the injected sample moves, and an outlet 223 through which the sample is discharged. The fine particle trap may further include a chamber 230 in which fine particles included in the sample are trapped when the sample moves along the channel 222.

The substrate 210 may be formed of an inorganic material, such as silicon (Si), glass, polymer, metal, ceramic, graphite, etc., or a material such as acrylic-based material, polyethylene terephtalate (PET), polycarbonate, polystylene, polypropylene, silicon nitride (SixNy), titanium oxide (TiO2), silicon oxide (SiO2), etc. The substrate 210 may include a function layer configured to adjust optical characteristics. For example, the substrate 210 may be treated with gold (Au), or antireflection coating, hydrophilic/hydrophobic coating, antigen-antibody treatment, or aptamer treatment may be performed on the substrate 210.

The substrate 210 may have a predetermined thickness. The thickness of the substrate 210 may vary without limitation in consideration of the type and size of the target fine particles and thermal conductivity used for each layer of the substrate 210. The term "fine particle" may refer to a particle having a size of 100 µm or less in diameter. The substrate 210 may be formed of multiple layers. For example, the substrate 210 may include a first layer in which the inlet 221, the channel 222, and the outlet 223 are formed and a second layer in which the chamber 230 is formed. A third layer may be formed below the second layer. The layers may be integrally formed of the same material, or may be separately formed of the same material or different materials and bonded to one another. For example, each layer may be formed of a material having a different thermal conductivity. For example, the first to third layers may be formed of a material that has thermal conductivity increasing stepwise from in the first layer to in the third layer. According to another example embodiment, the second layer and the third layer may be formed of a material having the same thermal conductivity that is greater than a thermal conductivity of the first layer.

The inlet 221 and the outlet 223 may be formed to communicate with the channel 222. The cross-sectional diameter of the inlet 221 connected to the channel 222 may be equal to or smaller than the cross-sectional diameter of the channel 222, but embodiments are not limited thereto. The inlet 221 may be irregularly formed such that its cross-section gradually increases or decreases toward the channel 222, but embodiments are not limited thereto. The cross-section of the inlet 221 may have various shapes, such as, for example, a circular shape, an elliptical shape, a hexagonal shape, a triangular shape, and the like. The outlet 223 may include an absorbent pad that may move and drain a solution using capillarity. In this way, a movement speed of the solution may be more easily controlled.

A filter may be further disposed in the channel 222 at a position in front and/or at the rear of the chamber 230 to pass particles having a predetermined size or less. The filter may include, for example, silicon, polyvinylidene fluoride (PVDF), polyethersulfone, polycarbonate, glass fiber, polypropylene, cellulose, mixed cellulose esters, polytetrafluoroethylene (PTFE), polyethylene terephthalate, polyvinyl chloride (PVC), nylon, phosphocellulose, diethylaminoethyl cellulose (DEAE), and the like, but embodiments are not limited thereto. Holes may have various shapes, such as, for example, a circular shape, a square shape, a slit shape, an irregular shape by glass fiber, and the like.

The chamber 230 may include a plurality of through holes 231. Tens of or more through holes 231 may be provided. Each through hole 231 may have a diameter that is equal to or less than 10 µm to trap fine particles one-by-one. The through holes 231 may be formed to penetrate in a direction perpendicular to the length direction of the channel 222, that is, in a direction from the first layer to the second layer of the substrate 210, as shown in FIG. 2B. The through holes 231 may have a constant cross-section. The cross-section of the through hole 231 may have various shapes, such as, for example a hexagonal shape, a rectangular shape, a triangular shape, a circular shape, and the like. For example the through hole 231 may be formed as a hexagonal cavity, a rectangular cavity, a circular cavity, a circular cavity, or the like.

The plurality of through holes 231 may be grouped into two or more through hole groups having different shapes or sizes to trap two or more types of fine particles having different sizes or shapes. In this case, the through hole groups may be arranged in the order of size so that gradually larger particles can be trapped along the movement direction of the sample. The number and arrangement of the through holes and the size and shape of each through hole are not limited, and may vary depending on the shape, size, type, and the like of the target fine particles.

When the sample injected through the inlet 221 moves along the channel 222, the fine particles included in the sample may be trapped in the through holes 231 by capillarity. The plurality of through holes 231 may be arranged in an NxM multi-dimensional array. In this case, N and M are integers greater than or equal to 2, which may be the same or different numbers. By using the multi-dimensional array, the fine particles of the sample may be trapped into the through holes 231 by capillarity at a higher speed. The through holes 231 may be arranged to have photonic crystals by adjusting the arrangement spacing of all or some of the plurality of through holes 231.

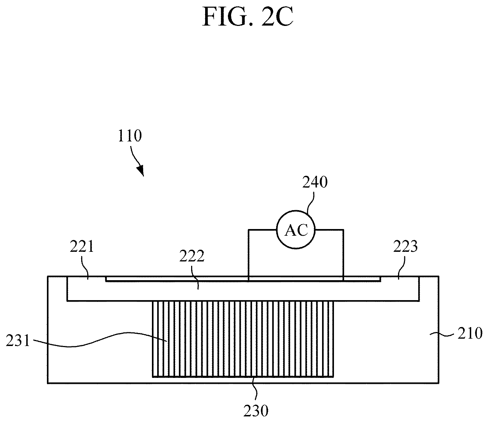

Referring to FIG. 2C, the fine particle trap 110 may further include an alternating current (AC) electrode 240. The AC electrode 240 may be disposed inside or outside of the channel 222, or may be disposed on an outer surface of the channel 222 in an array form. According to another example embodiment, the AC electrode 240 may be disposed on an inner surface or outer surface of the through hole 231. The AC electrode 240 may apply an AC voltage to the fine particle trap 110 under the control of the processor 130, and allow the fine particles in the sample to be trapped in the through holes 231 by dielectrophoresis induced through the applied AC voltage.

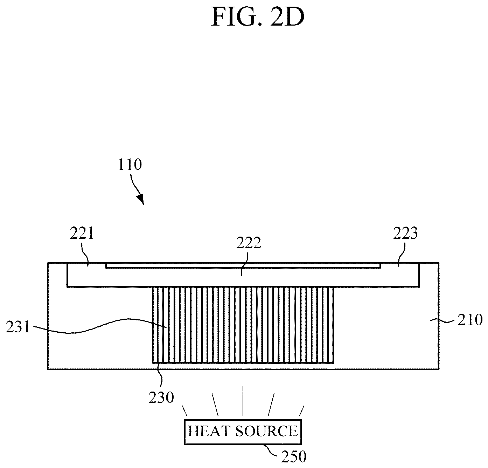

Referring to FIG. 2D, the fine particle trap 110 may further include a heat source 250. The heat source 250 may be a light source configured to emit light to the plurality of through holes 231 of the chamber 230. The light source may emit laser light. However, embodiments are not limited thereto. Light emitted by the light source may be converted into heat to induce a photothermal effect, and the fine particles in the sample may be quickly trapped in the plurality of through holes 231 by the photothermal effect. The heat source 250 may be formed as an electrical heating element.

A photothermal film configured to convert light into heat may be attached to the interior of the chamber 230, the interior of the substrate 210, or the entire or part of the bottom surface of the substrate 210. The thickness of the photothermal film is not particularly limited, and may be appropriately modified in consideration of characteristics of a material used as the photothermal film, such as thermal conductivity or heat retention. The photothermal film may be formed of a material, such as polymer, metal, metal oxide, nanocomposite, nanostructure, semiconductor, or the like. For example, a polyimide (PI) film, a gold (Au) film, or an aluminum nanostructure (AINS) film may be used.

The fine particle trap 110 may further include a temperature sensor. The temperature sensor may measure a temperature of through holes 231 heated by the heat source 250 and send the measured temperature to the processor 130. The processor 130 may control the heat source 250 based on the measured temperature so that the plurality of through holes 231 maintain a constant temperature.

The fine particle trap 110 may include both the electrode 240 and the heat source 250. The processor 130 may selectively or simultaneously control the electrode 240 and the heat source 250 so that the fine particles can be more effectively trapped in the plurality of through holes by capillarity, dielectrophoresis, and photothermal effect. However, embodiments are not limited thereto, and the fine particle trap 110 may further include an active and/or passive driving device, such as a passive vacuum void pump, a syringe pump, a vacuum pump, a pneumatic pump, and the like, and/or a structure used for moving the solution, such as an electro-wetting device.

Referring back to FIG. 1, the measurer 120 may include a light source 121 and a detector 122. When the fine particles are trapped in the plurality of through holes 231, a transmission, scattering, or reflection spectrum may be measured from the plurality of through holes 231 by using the light source 121 and the detector 122.

The light source 121 may be one of, for example, a light emitting diode (LED), a vertical-cavity surface-emitting laser (VCSEL), a laser diode (LD), a tungsten lamp, a fluorescent lamp, a halogen lamp, a mercury lamp, a xenon lamp, a metal halide lamp, or a combination thereof. A wavelength band of the light emitted by the light source 121 is nor particularly limited.

The detector 122 may detect light scattered, reflected, or transmitted through the plurality of through holes. The detector 122 may include, for example, a photomultiplier tube, a photo detector, a photomultiplier tube array, a photo detector array, a complementary metal-oxide semiconductor (CMOS) sensor, or a spectrometer.

The light source 121 and the detector 122 may be disposed in opposite directions relative to each other with respect to the plurality of through holes. In this way, when the light emitted to the plurality of through holes 231 by the light source 121 passes through the plurality of through holes 231, the measurer 120 may use the detector 122 to detect the light that has passed through the holes and obtain a transmission spectrum based on the detected light. However, the arrangement structure is not limited those illustrated in the drawings, and may be variously modified in consideration of the type and size of the fine particles, structural limitations of the device 100, and the like. When the light source 121 is arranged in the same direction as the heat source 250 of the fine particle trap 110, the light source 121 and the heat source 250 may be unitarily formed, or a part of the light source 121 may be used as the heat source 250.

The processor 130 may control the fine particle trap 110 and the measurer 120, and estimate the number of fine particles trapped in the plurality of through holes 231 based on the spectrum measured by the measurer 120.

For example, the processor 130 may control the electrode 240 and/or the heat source 250 such that the fine particles in the sample can be more rapidly trapped in the plurality of through holes by the capillarity, dielectrophoresis, and/or photothermal effect when the sample injected into the inlet 221 of the fine particle trap 110 moves along the channel 222. In this case, control conditions for the electrode 240 and/or the heat source 250 may be predefined. In addition, the processor 130 may obtain a spectrum by repeatedly controlling the light source 121 and the detector 122 included in the measurer 120 one or more times when the fine particles are trapped in the plurality of through holes. The driving conditions (e.g., wavelength, intensity of current, duration, etc.) for the light source 121 may be predefined, and the processor 130 may drive the light source according to the driving conditions.

When one or more spectra are measured, the processor 130 may estimate the number of fine particles trapped in the plurality of through holes by analyzing the measured spectra. The processor 130 may extract one or more features by analyzing the spectra, and estimate the number of fine particles by applying a predefined fine particle estimation model to the extracted features. Here, the estimation model, which is a model that defines a correlation between features extracted from a spectrum and the number of fine particles, may be a linear model, a regression model, a neural network model, etc. However, embodiments are not limited thereto.

FIG. 3A is a diagram illustrating a change in transmission spectra before and after fine particles are trapped in the plurality of through holes. The left side of FIG. 3A shows through holes 310 before fine particles are trapped, and the right side shows through holes 320 after the fine particles are trapped. A spectrum 311 represents a transmission spectrum as measured in the through holes 310 before fine particles are trapped and a spectrum 321 represents a transmission spectrum as measured in the through holes 320 after the fine particles are trapped.

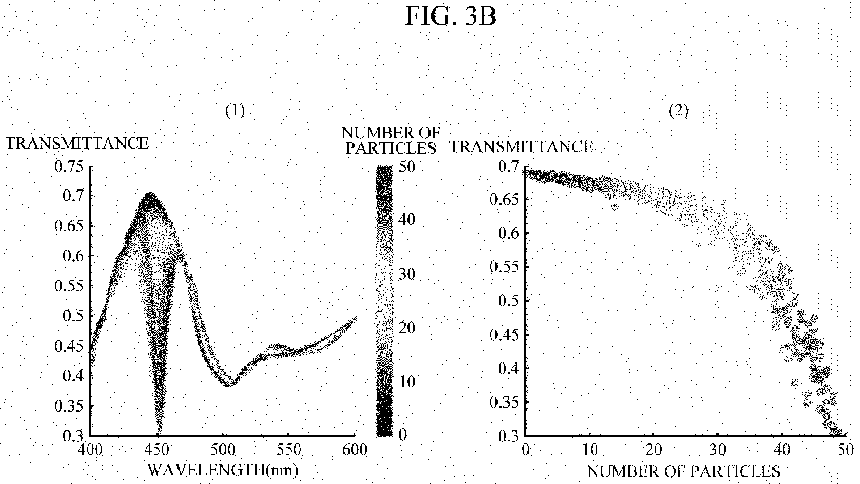

FIG. 3B illustrates a transmission spectrum 1 measured in the plurality of through holes and a graph 2 showing the change trend of transmittance according to the number of fine particles trapped in the plurality of through holes. As the fine particles are trapped in the through holes, the transmission spectrum changes and the change in transmission spectrum has a correlation with the number of the trapped fine particles. Based on this correlation, the number of the fine particles trapped in the plurality of through holes may be estimated.

The processor 130 may extract one or more features from the transmission spectrum measured in the plurality of through holes. For example, the processor 130 may extract one or more principal components as features by performing a principal component analysis (PCA) on the transmission spectrum. For example, the processor 130 may extract one of the first principal component and the second principal component as a feature, or extract a value obtained by combining the two principal components as a feature. However, embodiments are not limited thereto, and the feature may be extracted by using at least one of the transmission spectrum 311 before the fine particles are trapped and the transmission spectrum 321 after the fine particles are trapped. For example, a difference of the lowest point between spectrum 311 and spectrum 321, a difference of the peak point between spectrum 311 and spectrum 321, or a wavelength difference between valley points between spectrum 311 and spectrum 321 may be extracted as a feature.

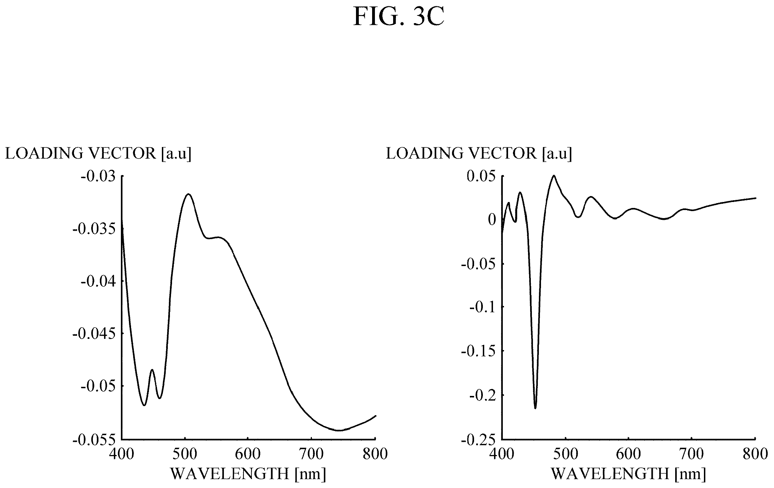

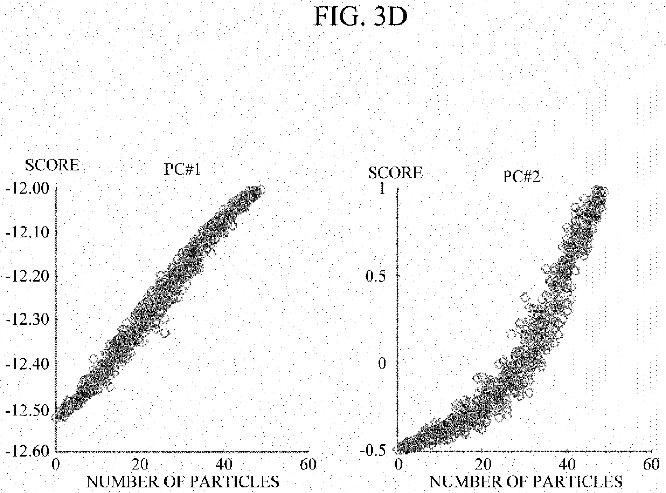

The processor 130 may input the extracted feature into the fine particle estimation model and estimate an output value of the model as the number of fine particles. FIG. 3C shows graphs of the first principal component PC#1 and the second principal component PC#2 extracted from the transmission spectrum, and FIG. 3D shows graphs illustrating a correlation between the score of each of the principal components PC#1 and PC#2 and the number of fine particles. The fine particle estimation model may be model that defines a correlation between a principal component (e.g., PC#2) extracted from a transmission spectrum and the number of fine particles. Through the fine particle estimation model, the number of the fine particles trapped in the plurality of through holes may be directly quantified, thereby minimizing quantitative errors even when the chamber size is small.

The processor 130 may determine whether to calibrate the fine particle estimation model, and perform calibration of the fine particle estimation model when it is determined to perform calibration. In this case, conditions for performing calibration may be predefined. According to the conditions for performing calibration, calibration may be performed when there is a user's request, when a preset calibration period is reached, or before or after the fine particles are estimated. Upon determining to perform calibration, the processor 130 may guide the user to perform calibration, thereby preparing reference particles or the like.

When it is determined to perform calibration, reference particles may be injected through the inlet 221. The reference particles may include one or more types of fine particles and a predefined number of fine particles of each type. When the reference particles are injected to the inlet 221, the processor 130 may control the electrode 240 and/or the heat source 250 of the fine particle trap 110 so that the reference particles can be trapped in the plurality of through holes 231 of the chamber 230. When the reference particles are trapped in the plurality of through holes 231, the processor 130 may control the measurer 120 several times to obtain a plurality of calibration spectra in the plurality of through holes 231. When the calibration spectra are obtained, one or more features may be extracted as training data from the obtained calibration spectra, and the fine particle estimation model may be trained using the extracted training data. For example, a principal component (e.g., the first or second principal component) may be extracted as training data by performing a PCA of the calibration spectra, and the fine particle estimation model that defines a correlation between the principal component and the number of fine particles may be trained based on the extracted training data.

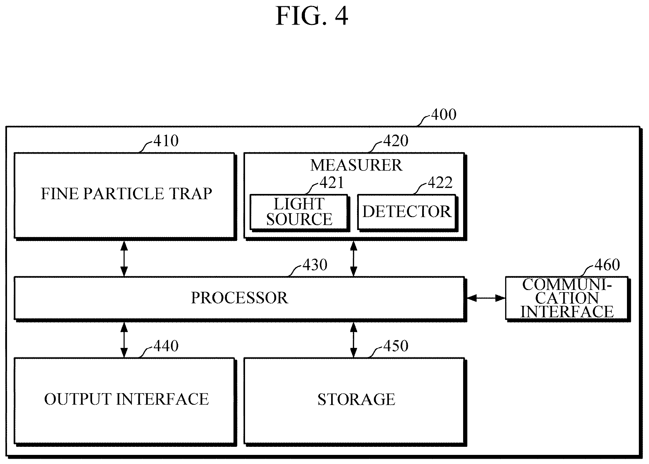

FIG. 4 is a block diagram illustrating an apparatus configured to detect fine particles according to another example embodiment.

Referring to FIG. 4, an apparatus 400 configured to detect fine particles may include a fine particle trap 410, a measurer 420, a processor 430, an output interface 440, a storage 450, and a communication interface 460. The measurer 420 includes a light source 421 and a detector 422, and the fine particle trap 410, the measurer 420, and the processor 430 are described above, and thus detailed descriptions thereof will not be reiterated below.

The output interface 440 may output the processing process or processing results (e.g., the estimated number of fine particles) of the fine particle trap 410, the measurer 420, and the processor 430. The output interface 440 may provide information to the user using, for example, a visual output module (e.g., display), a voice output module (e.g., speaker), a haptic module, and the like. In addition, the output interface 440 may output calibration guide under the control of the processor 430.

The storage 450 may store various types of data (e.g., calibration conditions, light source control conditions, heat source control conditions, electrode control conditions, a fine particle estimation model, etc.) necessary for the fine particle trap 410, the measurer 420, and the processor 430 and/or processing results (e.g., the number of fine particles). The storage 450 may include at least one type of storage medium of a flash memory type, a hard disk type, a multimedia card fine type, a card type memory (for example, secure digital (SD) or extreme digital (XD) memory), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk.

The communication interface 460 may communicate with an external device to transmit and receive various data to and from the external device under the control of the processor 430. The external device may be medical equipment, a printer to print out results, a display to display the results, a digital television (TV), a desktop computer, a cellular phone, a smartphone, a tablet device, a laptop computer, a personal digital assistant (PDA), a portable multimedia player (PMP), a navigation system, an MP3 player, a digital camera, a wearable device, and the like, but is not limited thereto.

The communication interface 460 may communicate with the external device by using various communication techniques such as Bluetooth communication, Bluetooth Low Energy (BLE) communication, Near Field Communication (NFC), WLAN communication, Zigbee communication, Infrared Data Association (IrDA) communication, wireless fidelity (Wi-Fi) Direct (WFD) communication, Ultra-Wideband (UWB) communication, Ant+ communication, Wi-Fi communication, Radio Frequency Identification (RFID) communication, 3G communication, 4G communication, 5G communication, and the like. However, embodiments are not limited thereto.

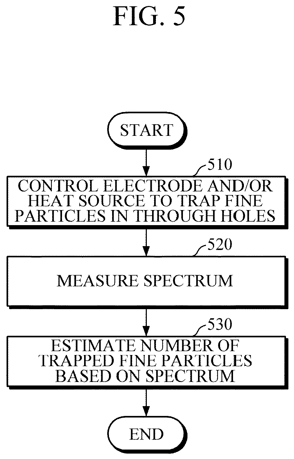

FIG. 5 is a flowchart illustrating a method of detecting fine particles according to an example embodiment.

The method illustrated in FIG. 5 is an example of a method of detecting fine particles performed by the apparatuses 100 and 400 configured to detect fine particles shown in FIGS. 1 and 4, which is described in detail above, and will be briefly described below.

In operation 510, when a sample is injected into the inlet of the fine particle trap, the electrode and/or the heat source may be controlled to allow fine particles to be trapped in a plurality of through holes. The plurality of through holes may have a diameter of 10 µm or less to trap the fine particles, for example, superfine particles one-by-one, and the number and arrangement of the through holes and the size and shape of each through hole are not particularly limited and may vary depending on the shape, size, and type of target fine particles. The plurality of through holes are formed to penetrate in a direction perpendicular to the length direction of the channel so that the fine particles in the sample moving along the channel can be more rapidly trapped in the through holes by capillarity, dielectrophoresis, and/or photothermal effect.

In operation 520, a spectrum may be obtained from the plurality of through holes by the measurer. The light source included in the measurer may be controlled to emit light to the plurality of through holes in which the fine particles are trapped, and light scattered, reflected, or transmitted through the plurality of through holes may be detected by the detector to obtain the spectrum.

In operation 530, the number of the fine particles trapped in the through holes may be estimated by analyzing the measured spectrum. For example, a feature may be extracted from the spectrum by analyzing the spectrum through a PCA. In this case, the feature may be the first principal component and/or the second principal component of the spectrum.

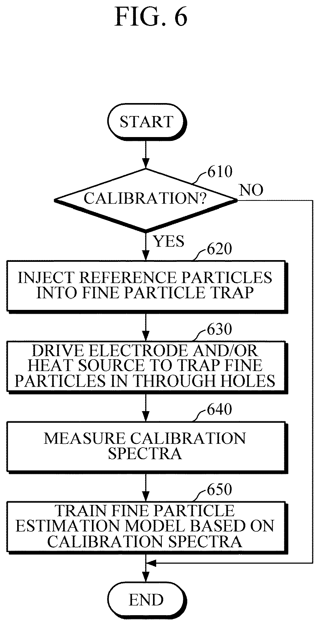

FIG. 6 is a flowchart illustrating a method of detecting fine particles according to another example embodiment.

The method illustrated in FIG. 5 is an example of a method of detecting fine particles performed by the apparatuses 100 and 400 configured to detect fine particles shown in FIGS. 1 and 4, which is described in detail above, and will be briefly described below.

In operation 610, the processor may determine whether to calibrate the fine particle estimation model. The processor may determine to calibrate the fine particle estimation model when a predetermined condition is satisfied. According to the conditions for performing calibration, calibration may be performed when there is a user's request, when a preset calibration period is reached, or before or after the fine particles are estimated.

In operation 620, reference particles may be injected into the inlet of the fine particle trap. Here, the reference particles may include a preset type and preset number of fine particles, and there may be one or more types of the reference particles.

Then, the reference particles injected into the inlet of the fine particle trap move along the channel and are trapped in the plurality of through holes by capillarity, dielectrophoresis, and/or photothermal effect. In this case, the processor may control the electrode and/or the heat source to induce the dielectrophoresis and/or photothermal effect.

In operation 630, a plurality of calibration spectra may be measured through the light source and detector included in the measurer.

In operation 640, the fine particle estimation model may be trained based on the plurality of calibration spectra. For example, a plurality of principal components may be extracted as training data by performing a PCA of the plurality of calibration spectra, and the fine particle estimation model may be trained based on the extracted training data.

The present disclosure may be realized as a computer-readable code written on a computer-readable recording medium. The computer-readable recording medium may be any type of recording device in which data is stored in a computer-readable manner.

Examples of the computer-readable recording medium include a read-only memory (ROM), a random-access memory (RAM), a compact disc (CD)-ROM, a magnetic tape, a floppy disc, an optical data storage, and a carrier wave (e.g., data transmission through the Internet). The computer-readable recording medium may be distributed over a plurality of computer systems connected to a network so that a computer-readable code is written thereto and executed therefrom in a decentralized manner. Functional programs, codes, and code segments for implementing the disclosure be easily deduced by computer programmers of ordinary skill in the art, to which the disclosure pertains.

While example embodiments have been described with reference to the figures, it will be understood by those of ordinary skill in the art that various changes in form and details may be made therein without departing from the scope as defined by the following claims.

## Claims

1. An apparatus configured to detect fine particles, comprising:
a fine particle trap comprising a plurality of through holes that are configured to trap the fine particles;
a measurer comprising:
a light source configured to emit light to the plurality of through holes, wherein the plurality of through holes have a diameter equal to or less than 10 µm, and
a detector configured to detect light scattered, reflected, or transmitted through the plurality of through holes and measure a spectrum; and
a processor configured to estimate a number of the fine particles trapped in the plurality of through holes based on of the measured spectrum,
**characterised in that** the processor is configured to extract one or more features from the spectrum using a principal component analysis, PCA, and estimate the number of the fine particles based on the extracted features using a fine particle estimation model, wherein the fine particle estimation model defines a correlation between an extracted principal component and the number of fine particles.

2. The apparatus of claim 1, wherein the fine particle trap further comprises an inlet through which a sample is injected, a channel through which the injected sample moves and an outlet through which the sample is discharged, and
wherein the plurality of through holes are formed to penetrate in a direction perpendicular to a length direction of the channel such that the sample moving along the channel is trapped.

3. The apparatus of claim 1 or 2, wherein the fine particles are trapped in the through holes by at least one of capillarity, dielectrophoresis, or photothermal effect.

4. The apparatus of claim 3, wherein the fine particle trap further comprises an alternating current, AC, electrode configured to induce the dielectrophoresis based on a control of the processor, or
wherein the fine particle trap further comprises a heat source configured to generate the photothermal effect based on a control of the processor.

5. The apparatus of one of claims 1 to 4, wherein the plurality of through holes are provided to have photonic crystals.

6. The apparatus of one of claims 1 to 5, wherein a shape of each of the plurality of through holes and a size of each of the plurality of through holes are determined based on at least one of a shape of each target fine particles, a size of each target fine particles, or a type of each target fine particles.

7. The apparatus of claim one of claims 1 to 6, wherein the one or more features comprise a feature of at least one of a first principal component extracted from the spectrum through the PCA and a second principal component extracted from the spectrum through the PCA.

8. The apparatus of claim 1, wherein the processor is further configured to determine whether to perform calibration and, based on determining to perform calibration, calibrate the fine particle estimation model using one or more reference particles,
wherein, based on the one or more reference particles being trapped in the plurality of through holes, the processor is further configured to control the measurer to obtain a plurality of calibration spectra and train the fine particle estimation model based on the obtained plurality of calibration spectra.

9. A method of detecting fine particles, comprising:
trapping the fine particles in a plurality of through holes, wherein the plurality of through holes have a diameter equal to or less than 10 µm,
emitting, by a light source, light to the plurality of through holes;
detecting, by a detector, light scattered, reflected, or transmitted through the plurality of through holes;
measuring, by the detector, a spectrum based on the detected light; and
estimating, by a processor, a number of the fine particles trapped in the plurality of through holes based on the measured spectrum, **characterised in that** the estimating of the number of the fine particles comprises extracting one or more features from the spectrum using a principal component analysis, PCA, and estimating the number of the fine particles based on the extracted features using a fine particle estimation model, wherein the fine particle estimation model defines a correlation between an extracted principal component and the number of fine particles.

10. The method of claim 9, wherein the fine particles are trapped in the through holes by at least one of capillarity, dielectrophoresis, or photothermal effect.

11. The method of claim 10, further comprising one of:
controlling, by the processor, an alternating current, AC voltage of a fine particle trap to induce the dielectrophoresis, and
controlling, by the processor, a heat source included in a fine particle trap to generate the photothermal effect.

12. The method of claim 9, further comprising:
determining whether to perform calibration based on a predetermined condition; and
calibrating the fine particle estimation model using one or more reference particles based on determining to perform calibration,
wherein the calibrating of the fine particle estimation model comprises:
trapping the one or more reference particles in the plurality of through holes;
obtaining a plurality of calibration spectra; and
training the fine particle estimation model based on the obtained plurality of calibration spectra.

## Patentansprüche

1. Vorrichtung zum Erfassen von feinen Partikeln, aufweisend:
eine Feinpartikelfalle, die eine Vielzahl von Durchgangslöchern aufweist, die zum Auffangen der feinen Partikel konfiguriert sind;
eine Messvorrichtung, die aufweist:
eine Lichtquelle, die zum Emittieren von Licht zu der Vielzahl von Durchgangslöchern konfiguriert ist, wobei die Vielzahl von Durchgangslöchern einen Durchmesser von 10 µm oder weniger aufweist, und
einen Detektor, der zum Erfassen von Licht, das durch die Vielzahl von Durchgangslöchern gestreut, reflektiert oder übertragen wird, und zum Messen eines Spektrums konfiguriert ist; und
einen Prozessor, der so konfiguriert ist, dass er eine Anzahl der in der Vielzahl von Durchgangslöchern auf der Basis des gemessenen Spektrums geschätzten feinen Partikel schätzt,
**dadurch gekennzeichnet, dass** der Prozessor so konfiguriert ist, dass er ein oder mehrere Merkmale aus dem Spektrum unter Verwendung einer Hauptkomponentenanalyse (PCA) extrahiert und die Anzahl der feinen Partikel auf der Basis der extrahierten Merkmale unter Verwendung eines Feinpartikel-Schätzmodells schätzt, wobei das Feinpartikel-Schätzmodell eine Korrelation zwischen einer extrahierten Hauptkomponente und der Anzahl der feinen Partikel definiert.

2. Vorrichtung nach Anspruch 1, wobei die Feinpartikelfalle ferner aufweist: einen Einlass, durch den eine Probe injiziert wird, einen Kanal, durch den sich die injizierte Probe bewegt, und einen Auslass, durch den die Probe abgegeben wird, und
wobei die Vielzahl von Durchgangslöchern so ausgebildet ist, dass sie in einer Richtung senkrecht zu einer Längsrichtung des Kanals durchdringen, so dass die sich entlang des Kanals bewegende Probe eingefangen wird.

3. Vorrichtung nach Anspruch 1 oder 2, wobei die feinen Partikel in den Durchgangslöchern durch mindestens eines von Kapillarität, Dielektrophorese oder photothermischem Effekt eingefangen werden.

4. Vorrichtung nach Anspruch 3, wobei die Feinpartikelfalle ferner eine Wechselstromelektrode aufweist, die so konfiguriert ist, dass sie die Dielektrophorese auf der Grundlage einer Steuerung des Prozessors induziert, oder
wobei die Feinpartikelfalle ferner eine Wärmequelle aufweist, die so konfiguriert ist, dass sie den photothermischen Effekt auf der Grundlage einer Steuerung des Prozessors erzeugt.

5. Vorrichtung nach einem der Ansprüche 1 bis 4, wobei die Vielzahl von Durchgangslöchern so vorgesehen ist, dass sie photonische Kristalle aufweisen.

6. Vorrichtung nach einem der Ansprüche 1 bis 5, wobei eine Form jedes der Vielzahl von Durchgangslöchern und eine Größe jedes der Vielzahl von Durchgangslöchern auf der Basis mindestens einer Form jedes Zielfeinteilchens, einer Größe jedes Zielfeinteilchens oder eines Typs jedes Zielfeinteilchens bestimmt wird.

7. Vorrichtung nach einem der Ansprüche 1 bis 6, wobei das eine oder die mehreren Merkmale ein Merkmal von mindestens einer ersten Hauptkomponente, die aus dem Spektrum durch die PCA extrahiert wurde, und einer zweiten Hauptkomponente, die aus dem Spektrum durch die PCA extrahiert wurde, aufweisen.

8. Vorrichtung nach Anspruch 1, wobei der Prozessor ferner so konfiguriert ist, dass er bestimmt, ob eine Kalibrierung durchgeführt werden soll, und auf der Grundlage der Bestimmung, dass eine Kalibrierung durchgeführt werden soll, das Feinpartikel-Schätzmodell unter Verwendung eines oder mehrerer Referenzpartikel kalibriert,
wobei der Prozessor auf der Grundlage der in der Vielzahl von Durchgangslöchern gefangenen einen oder mehreren Referenzpartikel ferner so konfiguriert ist, dass er die Messvorrichtung so steuert, dass sie eine Vielzahl von Kalibrierungsspektren erhält, und das Feinpartikel-Schätzmodell auf der Grundlage der erhaltenen Vielzahl von Kalibrierungsspektren trainiert.

9. Verfahren zum Erfassen von Feinpartikeln, aufweisend:
Einfangen der feinen Partikel in einer Vielzahl von Durchgangslöchern, wobei die Vielzahl von Durchgangslöchern einen Durchmesser von 10 µm oder weniger aufweist,
Emittieren von Licht durch eine Lichtquelle zu der Vielzahl von Durchgangslöchern;
Erfassen von Licht, das durch die Vielzahl von Durchgangslöchern gestreut, reflektiert oder übertragen wird, durch einen Detektor;
Messen eines Spektrums auf der Grundlage des erfassten Lichts durch den Detektor; und
Schätzen einer Anzahl der in der Vielzahl von Durchgangslöchern eingefangenen feinen Partikel durch einen Prozessor auf der Grundlage des gemessenen Spektrums, **dadurch gekennzeichnet, dass** das Schätzen der Anzahl der feinen Partikel das Extrahieren eines oder mehrerer Merkmale aus dem Spektrum unter Verwendung einer Hauptkomponentenanalyse (PCA) und das Schätzen der Anzahl der feinen Partikel auf der Grundlage der extrahierten Merkmale unter Verwendung eines Feinpartikel-Schätzmodells umfasst, wobei das Feinpartikel-Schätzmodell eine Korrelation zwischen einer extrahierten Hauptkomponente und der Anzahl der feinen Partikel definiert.

10. Verfahren nach Anspruch 9, wobei die feinen Partikel durch mindestens eines von Kapillarität, Dielektrophorese oder photothermischem Effekt in den Durchgangslöchern eingefangen werden.

11. Verfahren nach Anspruch 10, ferner aufweisend eines von:
Steuern einer Wechselstromspannung einer Feinpartikelfalle durch den Prozessor, um die Dielektrophorese zu induzieren, und
Steuern einer in einer Feinpartikelfalle enthaltenen Wärmequelle durch den Prozessor, um den photothermischen Effekt zu erzeugen.

12. Verfahren nach Anspruch 9, ferner aufweisend:
Bestimmen, ob eine Kalibrierung auf der Grundlage einer vorbestimmten Bedingung durchzuführen ist; und
Kalibrieren des Feinpartikel-Schätzmodells unter Verwendung eines oder mehrerer Referenzpartikel auf der Grundlage der Bestimmung, eine Kalibrierung durchzuführen,
wobei das Kalibrieren des Feinpartikel-Schätzmodells aufweist:
Einfangen des einen oder der mehreren Referenzpartikel in der Vielzahl von Durchgangslöchern; Erfassen einer Vielzahl von Kalibrierungsspektren; und
Trainieren des Feinpartikel-Schätzmodells auf der Basis der erfassten Vielzahl von Kalibrierungsspektren.

## Revendications

1. Appareil configuré pour détecter des particules fines, comprenant :
un piège à particules fines comportant une pluralité de trous traversants configurés pour piéger les particules fines ;
un dispositif de mesure comprenant :
une source lumineuse configurée pour émettre de la lumière vers la pluralité de trous traversants, dans lequel les trous de la pluralité de trous traversants présentent un diamètre inférieur ou égal à 10 µm, et
un détecteur configuré pour détecter la lumière diffusée, réfléchie ou transmise à travers la pluralité de trous traversants et pour mesurer un spectre ; et
un processeur configuré pour estimer le nombre de particules fines piégées dans la pluralité de trous traversants sur la base du spectre mesuré,
**caractérisé en ce que** le processeur est configuré pour extraire une ou plusieurs caractéristiques du spectre en utilisant une analyse en composantes principales, ACP, et pour estimer le nombre de particules fines sur la base des caractéristiques extraites en utilisant un modèle d'estimation de particules fines, dans lequel le modèle d'estimation de particules fines définit une corrélation entre une composante principale extraite et le nombre de particules fines.

2. Appareil selon la revendication 1, dans lequel le piège à particules fines comprend en outre une entrée à travers laquelle un échantillon est injecté, un canal à travers lequel l'échantillon injecté se déplace, et une sortie à travers laquelle l'échantillon est évacué, et
dans lequel la pluralité de trous traversants est formée pour pénétrer dans une direction perpendiculaire à la direction de la longueur du canal de telle sorte que l'échantillon se déplaçant dans le canal soit piégé.

3. Appareil selon la revendication 1 ou 2, dans lequel les particules fines sont piégées dans les trous traversants par au moins un effet parmi la capillarité, la diélectrophorèse et l'effet photothermique.

4. Appareil selon la revendication 3, dans lequel le piège à particules fines comprend en outre une électrode à courant alternatif, CA, configurée pour induire la diélectrophorèse sur la base d'une commande du processeur, ou
dans lequel le piège à particules fines comprend en outre une source de chaleur configurée pour générer l'effet photothermique sur la base d'une commande du processeur.

5. Appareil selon l'une des revendications 1 à 4, dans lequel la pluralité de trous traversants est pourvue pour recevoir des cristaux photoniques.

6. Appareil selon l'une des revendications 1 à 5, dans lequel la forme de chaque trou de la pluralité de trous traversants et la taille de chaque trou de la pluralité de trous traversants sont déterminées sur la base d'au moins un paramètre parmi la forme de chacune des particules fines cibles, la taille de chacune des particules fines cibles et le type de chacune des particules fines cibles.

7. Appareil selon l'une des revendications 1 à 6, dans lequel lesdites une ou plusieurs caractéristiques comprennent une caractéristique d'au moins une composante parmi une première composante principale extraite du spectre via l'ACP et une deuxième composante principale extraite du spectre via l'ACP.

8. Appareil selon la revendication 1, dans lequel le processeur est en outre configuré pour déterminer s'il faut ou non effectuer un étalonnage et, sur la base de la détermination qu'il faut effectuer un étalonnage, pour étalonner le modèle d'estimation de particules fines en utilisant une ou plusieurs particules de référence,
dans lequel, sur la base desdites une ou plusieurs particules de référence piégées dans la pluralité de trous traversants, le processeur est en outre configuré pour commander au dispositif de mesure d'obtenir une pluralité de spectres d'étalonnage et d'entraîner le modèle d'estimation de particules fines sur la base de la pluralité de spectres d'étalonnage obtenue.

9. Procédé de détection de particules fines, comprenant :
le piégeage des particules fines dans une pluralité de trous traversants, dans lequel les trous de la pluralité de trous traversants ont un diamètre inférieur ou égal à 10 µm ;
l'émission, par une source lumineuse, de lumière vers la pluralité de trous traversants ;
la détection, par un détecteur, de lumière diffusée, réfléchie ou transmise à travers la pluralité de trous traversants ;
la mesure, par le détecteur, d'un spectre sur la base de la lumière détectée ; et
l'estimation, par un processeur, du nombre de particules fines piégées dans la pluralité de trous traversants sur la base du spectre mesuré,
**caractérisé en ce que** l'estimation du nombre de particules fines comprend l'extraction d'une ou plusieurs caractéristiques dans le spectre en utilisant une analyse en composantes principales, ACP, et l'estimation du nombre de particules fines sur la base des caractéristiques extraites en utilisant un modèle d'estimation de particules fines, dans lequel le modèle d'estimation de particules fines définit une corrélation entre une composante principale extraite et le nombre de particules fines.

10. Procédé selon la revendication 9, dans lequel les particules fines sont piégées dans les trous traversants par au moins un effet parmi la capillarité, la diélectrophorèse et l'effet photothermique.

11. Procédé selon la revendication 10, comprenant en outre l'un des éléments suivants :
commande, par le processeur, d'une tension en courant alternatif, CA, d'un piège à particules fines pour induire la diélectrophorèse, et
commande, par le processeur, d'une source de chaleur incluse dans un piège à particules fines pour générer l'effet photothermique.

12. Procédé selon la revendication 9, comprenant en outre :
la détermination du fait qu'il faut effectuer ou non un étalonnage sur la base d'une condition prédéterminée ; et
l'étalonnage du modèle d'estimation de particules fines en utilisant une ou plusieurs particules de référence sur la base de la détermination du fait qu'il faut effectuer un étalonnage,
dans lequel l'étalonnage du modèle d'estimation de particules fines comprend :
le piégeage desdites une ou plusieurs particules de référence dans la pluralité de trous traversants ;
l'obtention d'une pluralité de spectres d'étalonnage ; et
l'entraînement du modèle d'estimation de particules fines sur la base de la pluralité de spectres d'étalonnage obtenue.
